# EUROPÄISCHE PATENTSCHRIFT

(11) **EP 2 478 250 B1**
(45) Veröffentlichungstag und Bekanntmachung des Hinweises auf die Patenterteilung: **22.07.2015**
(21) Anmeldenummer: 10754497.5
(22) Anmeldetag: 15.09.2010
(51) Int. Cl.: F16D 65/12

(54) **BREMSSCHEIBEN/NABENVERBINDUNG**
BRAKE DISC/HUB CONNECTION
LIAISON ENTRE DISQUE DE FREIN ET MOYEU

(30) Priorität: 17.09.2009 DE 102009041953
(43) Veröffentlichungstag der Anmeldung: 25.07.2012
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2010/063525
(87) Internationale Veröffentlichungsnummer: WO 2011/032968

(56) Entgegenhaltungen:
- WO-A1-02/25135
- WO-A1-2005/088151
- DE-A1- 19 918 069
- DE-C1- 19 807 184

## Beschreibung

Die Erfindung betrifft eine Bremsscheiben/Nabenverbindung nach dem Oberbegriff des Anspruchs 1.

Zur Befestigung einer Bremsscheibe an einer Nabe sowie zur Übertragung eines beim Bremsen entstehenden Bremsmoments auf die Nabe und damit auf ein angeschlossenen Fahrzeugrad, sind ineinander greifende, zahnförmige Formschlussmittel bekannt, die aus am Innenumfang der Bremsscheibe vorgesehenen Stützelementen und mit diesen im Sinne einer Verdrehsicherung korrespondierenden, am Außenumfang der Nabe angeordneten Mitnehmern bestehen.

Eine solche Bremsscheiben/Nabenverbindung ist beispielsweise aus der DE 199 18 069 A1 oder WO-A-2005/088151 bekannt.

Darin ist eine Bremsscheiben/Nabenverbindung geoffenbart, bei der eine Übertragung des Bremsmoments von der Bremsscheibe auf die Nabe über Zwischenelemente erfolgt, die zwei glattflächige, parallel zueinander verlaufende und in Funktionsstellung vollflächig aneinander liegende Schenkel aufweisen, die durch Faltung eines Blechstreifens gebildet sind. An einem der Schenkel liegt ein zugeordnetes Stützelement und am anderen Schenkel ein zugeordneter Mitnehmer an, jeweils an den einander abgewandten Flächen.

Funktional hat sich die Konstruktion durchaus bewährt.

Ein ständiges Problem stellt der Wärmeübergang der beim Bremsen entstehenden Reibungswärme von der Bremsscheibe auf die Nabe dar, wozu bislang verschiedene Möglichkeiten bekannt sind, die jedoch allesamt mit Nachteilen behaftet sind.

So werden beispielsweise wärmeisolierende Elemente eingesetzt oder entsprechende Trennschichten. Die gemäß der Gattung vorgesehenen Zwischenelemente haben zwar auch eine gewisse isolierende Wirkung, die allerdings aufgrund des ungehinderten Wärmeübergangs eher unbefriedigend ist. Dabei wird die Isolationswirkung erreicht durch einen mehrfachen Temperaturübergang, und zwar von der Bremsscheibe auf das Zwischenelement, durch die bei der Anlage der beiden Schenkel gebildete Trennfläche sowie vom Zwischenelement zur Nabe. Quasi isolierunterstützend erfolgt eine entsprechende Materialwahl für das Zwischenelement, bei dem eine relativ geringe Wärmeleitung gefordert ist, wie sie beispielsweise rostfreier Stahl aufweist.

Trotz dieser baulichen Gegebenheiten ist die Reduzierung des Wärmedurchgangs, wie erwähnt, lediglich in einem unbefriedigenden Umfang möglich, zumindest in wirtschaftlich sinnvoller Art und Weise.

Die insoweit vorhandene relativ hohe Wärmebelastung der Nabe beeinflusst die Standzeit der Bremsscheiben/Nabenverbindung insgesamt und führt unter Umständen zu funktions- und damit sicherheitsrelevante Auswirkungen.

Aus der WO 2005/088151 A1 sind Zwischenelemente bekannt, bei denen zur Demontage der Abstand der Schenkel zueinander durch axiales Verschieben verkleinert wird. Dabei sind an beiden Schenkeln miteinander korrespondierende Vorsprünge bzw. Vertiefungen vorgesehen, in deren gebildete Zwischenräume betriebsbedingt Schmutz gelangen kann, der, insbesondere in Verbindung mit der Reibungswärme zu einem Verbacken mit dem anliegenden Stützelement bzw. Mitnehmer führt, so dass eine Demontage vielfach nur sehr schwer zu bewerkstelligen ist.

Der Erfindung liegt die Aufgabe zugrunde, eine Bremsscheiben/Nabenverbindung der gattungsgemäßen Art so weiterzuentwickeln, dass mit konstruktiv geringem Aufwand die Wärmebelastung der Nabe minimiert und die Standzeit der Bremsscheiben/Nabenverbindung verbessert wird.

Diese Aufgabe wird durch eine Bremsscheiben/Nabenverbindung mit den Merkmalen des Anspruchs 1 gelöst.

Dadurch, dass die Schenkel lediglich in Teilbereichen aneinander liegen, also nicht mehr vollflächig, wird der Wärmeübergang um einen wesentlichen Faktor reduziert, wobei die verbleibenden Anlageflächen der beiden Schenkel lediglich abhängig von der auftretenden mechanischen Belastung zu dimensionieren sind. Die Anlageflächen sind so groß gewählt, dass die Bremskräfte ohne plastische Deformation der Zwischenelemente übertragen werden können.

Wie sich gezeigt hat, ist eine entsprechende Kraftübertragung dann gewährleistet, wenn die Anlageflächen etwa 25 bis 40 % der Gesamtüberdeckungsfläche betragen.

Einer der beiden Schenkel auf seiner Anlageseite ist gleichflächig, während der anliegende Schenkel auf seiner zugeordneten Seite mit Quer- oder Längsstegen versehen ist, die jeweils eine plane Auflagefläche aufweisen, die auf der Anlagefläche des anderen Schenkels aufliegt. Selbstverständlich liegen dabei die Auflageflächen der Stege in einer Ebene, so dass eine Gesamtauflage gewährleistet ist.

Die den Auflageflächen abgewandten Seiten sind gemäß der Erfindung glatt- und vollflächig ausgebildet, so dass sich das jeweilige Stützelement bzw. der jeweilige Mitnehmer über den gesamten Flächenbereich abstützen können zur Übertragung der Bremskräfte.

Durch die glatt- und vollflächige Ausbildung der die Außenseiten bildenden Flächen wird verhindert, dass sich zwischen den einander zugewandten Anlageflächen der Stützelemente bzw. der Mitnehmer und den jeweiligen Schenkeln Schmutz sammelt oder Korrosion ausbildet, was eine Demontage der Zwischenelemente im Servicefall erheblich erschweren würde.

Anstelle der genannten Stege sind auch andere Formen der partiellen Auflageflächen denkbar, deren Anzahl und Dimensionierung im Wesentlichen abhängig ist von den zu übertragenden Kräften.

Wie bisher kann als Material für das Zwischenelement rostfreier Stahl eingesetzt werden, wobei die Herstellung des Zwischenelementes in der Hauptsache durch spanloses Formen erfolgt.

Die hervorstehenden partiellen Auflageflächen können durch Prägen der umliegenden Bereiche hergestellt werden.

Da die dabei sich einstellende Materialverdrängung zu einer Längung und in den geprägten Bereichen zu einer Verbreiterung des Schenkels führt, was im Fertigungsablauf problematisch sein kann, sind zweckmäßigerweise entsprechende Maßnahmen vorzusehen.

Eine Verbreiterung des durch Prägen zu bearbeitenden Schenkels könnte zu einem Verklemmen des Blechstreifens innerhalb einer Führungseinrichtung führen, der dadurch begegnet wird, dass der zu prägende Schenkel über seine Länge schmaler geschnitten wird, so dass sich das Material beim Prägen ohne die Gefahr einer Verklemmung ausdehnen kann.

Eine Kompensation der Längendehnung erfolgt durch Vorsehen eines Materialpuffers zwischen dem Prägeprozess und einem nächsten Umformprozess, bei dem beispielsweise die Schenkel endseitig abgewinkelt werden.

Die Anlage des einen Schenkels lediglich in Teilbereichen am anderen Schenkel führt nicht nur zu einer Reduzierung der für einen Wärmeübergang wirksamen Flächen, sondern durch den zwischen zwei Teilbereichen gebildeten Spalt ergibt sich auch eine bessere Kühlung, da ein ungehinderter Durchtritt von Luft, vor allem auch Fahrtwind für eine effektive Kühlung sorgt, die gleichfalls zu einer Reduzierung der Wärmebelastung der entsprechenden Teile beiträgt.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Bremsscheiben/Nabenverbindung in einer Explosivdarstellung
- Figur 2: eine Einzelheit der Bremsscheiben/Nabenverbindung in einer perspektivischen Ansicht
- Figur 3: die Einzelheit nach Figur 2 in einer Seitenansicht.

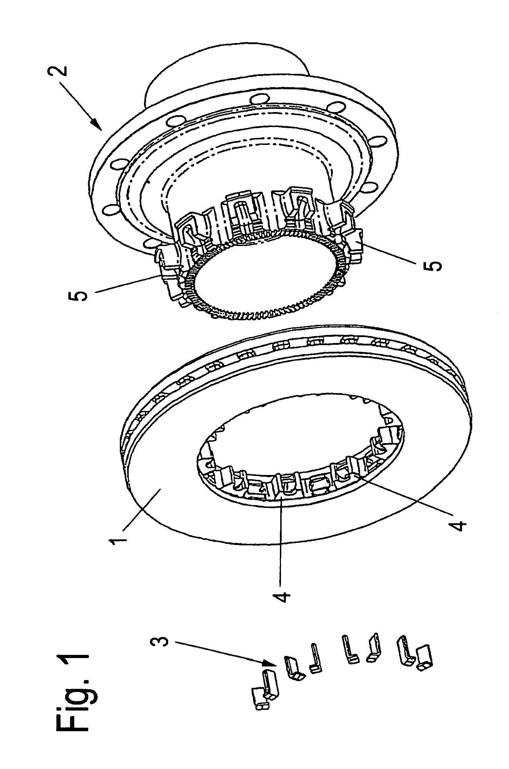

In der Figur 1 ist eine Bremsscheiben/Nabenverbindung dargestellt, zur Verbindung einer ringförmigen, innen belüfteten Bremsscheibe 1 mit einer Nabe 2, die als Bremsscheibennabe, aber auch als Radnabe ausgebildet sein kann, auf die die Bremsscheibe aufschiebbar ist.

Zur Drehmomentenübertragung sind am Innenumfang der Bremsscheibe 1 sich radial nach innen erstreckende, abständig zueinander angeordnete und gleichmäßig über den Umfang verteilte Stützelemente 4 angeformt.

Die Nabe 2 weist auf ihrem der Bremsscheibe 1 zugewandten Endabschnitt über den Außenumfang verteilte, radial nach außen vorstehende Mitnehmer 5 auf, die im Sinne einer Verzahnung mit den Stützelementen 4 der Bremsscheibe 1 korrespondieren.

Zwischen den Stützelementen 4 und den Mitnehmern 5 sind Zwischenräume gebildet, in die Zwischenelemente 3 in Achsrichtung der Bremsscheibe 1 bzw. der Nabe 2 eingefügt sind. Das bei einer Bremsung wirksam werdende Bremsmoment wird von den Stützelementen 4 der Bremsscheibe 1 über die Zwischenelemente 3 auf die Mitnehmer 5 der Nabe 2 übertragen.

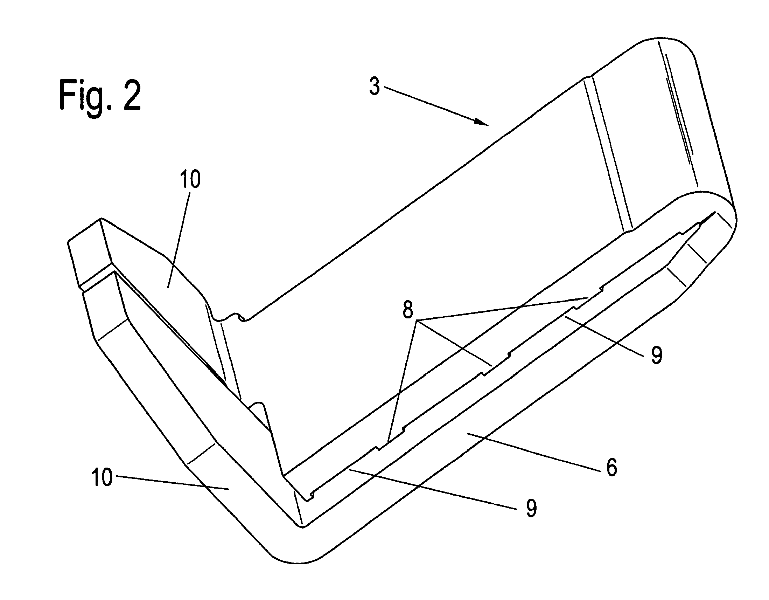

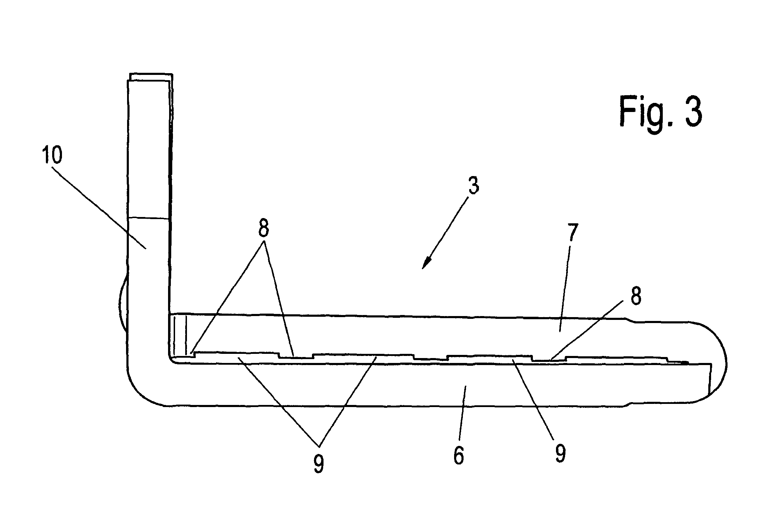

Ein solches Zwischenelement ist als Einzelheit jeweils in den Figuren 2 und 3 dargestellt. Darin ist auch zu erkennen, dass das Zwischenelement 3 zwei aneinander liegende Schenkel 6, 7 aufweist, wobei sich an deren einander abgewandten Flächen ein zugeordneter Mitnehmer 5 bzw. ein zugeordnetes Stützelement 4 abstützen.

Erfindungsgemäß liegt der Schenkel 7 mit Vorsprüngen an dem im weitesten Sinn parallel ausgerichteten Schenkel 6 an. In der Figur 2 ist das Zwischenelement vor einer Montage gezeigt. Hierbei sind die Schenkel 6, 7 geringfügig, durch innewohnende Rückstellkräfte gespreizt, d.h. sie liegen in diesem Fall noch nicht aneinander.

Hierzu sind im Beispiel an dem Schenkel 7 durch Prägen quer zur Längserstreckung des Schenkels 7 Stege 8 angeformt, die jeweils eine planebene Auflagefläche aufweisen, die an der zugewandten Fläche des Schenkels 6 anliegen.

Bevorzugt sind die Stege 8 in gleichem Abstand zueinander angeordnet.

Durch die Prägung, bei der eine Materialverdünnung durch ein Prägewerkzeug erreicht wird, bilden sich zwischen den Stegen 8 Spalte 9 aus, die eine Luftzirkulation und damit einen Wärmeaustrag ermöglichen.

Wie insbesondere die Figur 2 sehr deutlich zeigt, ist der obere Schenkel 7 schmaler geschnitten als der untere Schenkel 6, so dass eine Verbreiterung des Schenkels 7 im Bereich der Prägung problemlos möglich ist, natürlich nur dann, wenn die Verbreiterung nicht über die Breite des unteren Schenkels 6 hinausgeht.

In dieser Darstellung ist auch deutlich zu erkennen, dass die beiden einander abgewandten Außenflächen der Schenkel 6, 7 glatt- und vollflächig ausgebildet sind, ebenso wie die Auflagefläche des Schenkels 6, an der die Stege 8 anliegen.

Im Übrigen besteht das Zwischenelement 3 aus einem im Wesentlichen spanlos umgeformten Blechstreifen, der beispielsweise von einem Coil abgelängt sein kann, wobei die beiden Schenkel 6, 7 durch Faltung quer zur Längserstreckung hergestellt werden und endseitig jeweils eine Abwinkelung 10 aufweisen, die im Zusammenwirken mit einem nicht dargestellten Sicherungselement eine axiale Sicherung der Bremsscheibe 1 an der Nabe 2 gewährleistet.

## Patentansprüche

1. Bremsscheiben/Nabenverbindung, bei der eine Bremsscheibe (1) an ihrem inneren Umfang eine Vielzahl gleichmäßig verteilter Stützelemente (4) aufweist, die mit am Außenumfang einer Nabe (2) angeordneten Mitnehmern (5) im Sinne einer Verdrehsicherung korrespondieren, wobei zur Übertragung eines Bremsmomentes in zwischen den Mitnehmern (5) und den Stützelementen (4) gebildeten Zwischenräumen in Achsrichtung der Bremsscheibe (1) eingefügte Zwischenelemente (3) mit zwei aneinander liegenden Schenkeln (6, 7) angeordnet sind, an deren einander abgewandten Flächen ein zugeordneter Mitnehmer (5) bzw. ein zugeordnetes Stützelement (4) anliegen, **dadurch gekennzeichnet, dass** die Außenflächen des einen Schenkels (7) mit ausgebildeten Vorsprüngen an dem beidseitig glatt- und vollflächigen anderen Schenkel (6) anliegt.

2. Bremsscheiben/Nabenverbindung nach Anspruch 1, **dadurch gekennzeichnet, dass** die Vorsprünge aus Stegen (8, 9) oder dergleichen bestehen.

3. Bremsscheiben/Nabenverbindung nach 2, **dadurch gekennzeichnet, dass** die Stege (8) in Längs- und/oder Querrichtung der Längserstreckung des Zwischenelementes (3) verlaufen.

4. Bremsscheiben/Nabenverbindung nach einem der Ansprüche 2 oder 3, **dadurch gekennzeichnet, dass** die Stege (8) parallel und abständig zueinander verlaufen.

5. Bremsscheiben/Nabenverbindung nach einem der Ansprüche 2 bis 4, **dadurch gekennzeichnet, dass** die Stege (8) in gleichem Abstand zueinander verlaufen.

6. Bremsscheiben/Nabenverbindung nach einem der vorhergehenden Ansprüche, **dadurch gekennzeichnet, dass** die Vorsprünge durch Prägen der angrenzenden Bereiche gebildet sind.

7. Bremsscheiben/Nabenverbindung nach einem der vorhergehenden Ansprüche, **dadurch gekennzeichnet, dass** die Vorsprünge plane Auflageflächen aufweisen.

8. Bremsscheiben/Nabenverbindung nach Anspruch 7, **dadurch gekennzeichnet, dass** die Auflageflächen zueinander fluchten.

9. Bremsscheiben/Nabenverbindung nach einem der vorhergehenden Ansprüche, **dadurch gekennzeichnet, dass** der die Vorsprünge aufweisende Schenkel (7) vor der Anbringung der Vorsprünge schmaler ist als der andere Schenkel (6).

10. Bremsscheiben/Nabenverbindung nach einem der vorhergehenden Ansprüche, **dadurch gekennzeichnet, dass** das Zwischenelement (3) aus einem Material mit geringer Wärmeleitfähigkeit besteht.

11. Bremsscheiben/Nabenverbindung nach einem der vorhergehenden Ansprüche, **dadurch gekennzeichnet, dass** das Zwischenelement (3) aus rostfreiem Stahl besteht.

12. Bremsscheiben/Nabenverbindung nach einem der vorhergehenden Ansprüche, **dadurch gekennzeichnet, dass** das Zwischenelement (3) aus einem Blechstreifen gebildet ist.

13. Bremsscheiben/Nabenverbindung nach einem der vorhergehenden Ansprüche, **dadurch gekennzeichnet, dass** die Anlageflächen der Vorsprünge insgesamt etwa 25 % bis 40 % der Gesamtüberdeckungsfläche der Schenkel (6, 7) betragen.

## Claims

1. Brake disc/hub connection, wherein a brake disc (1) has at its inner circumference a plurality of evenly distributed support elements (4), which correspond to drivers (5) located at the outer circumference of a hub (2) while providing security against rotation, wherein, for the transmission of a braking torque, intermediate elements (3) with two contacting legs (6, 7), which are installed in the axial direction of the brake disc (1), are provided in interstices between the drivers (5) and the support elements (4), with an associated driver (5) or an associated support element (4) bearing against surfaces of said legs (6, 7) which are averted from one another, **characterised in that** the outer surfaces of the one leg (7) bear with projections formed thereon against the other leg (6), which is smooth and solid on both sides.

2. Brake disc/hub connection according to claim 1, **characterised in that** the projections consist of webs (8, 9) or the like.

3. Brake disc/hub connection according to claim 2, **characterised in that** the webs (8) extend in the longitudinal and/or transverse direction of the longitudinal dimension of the intermediate element (3).

4. Brake disc/hub connection according to claim 2 or 3, **characterised in that** the webs (8) extend parallel to and at a distance from one another.

5. Brake disc/hub connection according to any of claims 2 to 4, **characterised in that** the webs (8) are evenly spaced.

6. Brake disc/hub connection according to any of the preceding claims, **characterised in that** the projections are formed by stamping the adjoining regions.

7. Brake disc/hub connection according to any of the preceding claims, **characterised in that** the projections have flat contact surfaces.

8. Brake disc/hub connection according to claim 7, **characterised in that** the contact surfaces are aligned to one another.

9. Brake disc/hub connection according to any of the preceding claims, **characterised in that** the leg (7) having the projections is narrower than the other leg (6) before the projections are mounted.

10. Brake disc/hub connection according to any of the preceding claims, **characterised in that** the intermediate element (3) is hade of a material having a low thermal conductivity.

11. Brake disc/hub connection according to any of the preceding claims, **characterised in that** the intermediate element (3) is made of stainless steel.

12. Brake disc/hub connection according to any of the preceding claims, **characterised in that** the intermediate element is formed from a sheet metal strip.

13. Brake disc/hub connection according to any of the preceding claims, **characterised in that** the contact surfaces of the projections in total amount to approximately 25% to 40% of the total coverage surface of the legs (6, 7).

## Revendications

1. Liaison disque de frein/moyeu, dans laquelle un disque (1) de frein a sur son pourtour intérieur une pluralité d'éléments (4) d'appui, qui sont répartis uniformément et qui correspondent, au sens d'une sécurité vis-à-vis de la torsion, à des entraîneurs (5) disposés sur le pourtour extérieur d'un moyeu (2) dans laquelle, pour la transmission d'un couple de freinage, il est disposé des éléments (3) intermédiaires, qui sont insérés dans la direction axiale du disque (1) de frein dans des espaces intermédiaires formés entre les entraîneurs (5) et les éléments (4) d'appui et qui ont deux branches (6, 7) l'une contre l'autre sur les surfaces éloignées l'une de l'autre desquelles s'applique un entraîneur (5) associé ou un élément (4) d'appui associé, **caractérisée en ce que** les surfaces extérieures de l'une des branches (7) s'appliquent, par des saillies qui sont formées, sur l'autre branche (6) à surface lisse et pleine des deux côtés.

2. Liaison disque de frein/moyeu suivant la revendication 1, **caractérisée en ce que** les saillies sont constituées de nervures (8, 9) ou analogues.

3. Liaison disque de frein/moyeu suivant la revendication 2, **caractérisée en ce que** les nervures (8) s'étendent dans la direction longitudinale et/ou dans la direction transversale de l'étendue longitudinale de l'élément (3) intermédiaire.

4. Liaison disque de frein/moyeu suivant l'une des revendications 2 ou 3,
**caractérisée en ce que** les nervures (8) s'étendent parallèlement les unes aux autres et à distance les unes des autres.

5. Liaison disque de frein/moyeu suivant l'une des revendications 2 à 4,
**caractérisée en ce que** les nervures (8) s'étendent à une même distance les unes des autres.

6. Liaison disque de frein/moyeu suivant l'une des revendications précédentes, **caractérisée en ce que** les saillies sont formées par estampage des parties voisines.

7. Liaison disque de frein/moyeu suivant l'une des revendications précédentes,
**caractérisée en ce que** les saillies ont des surfaces planes de support.

8. Liaison disque de frein/moyeu suivant la revendication 7
**caractérisée en ce que** les surfaces de support sont alignées les unes avec les autres.

9. Liaison disque de frein/moyeu suivant l'une des revendications précédentes,
**caractérisée en ce que** la branche (7) ayant les saillies est, avant que les saillies soient ménagées, plus étroite que l'autre branche (6).

10. Liaison disque de frein/moyeu suivant l'une des revendications précédentes,
**caractérisée en ce que** l'élément (3) intermédiaire est en un matériau ayant une conductibilité calorifique petite.

11. Liaison disque de frein/moyeu suivant l'une des revendications précédentes,
**caractérisée en ce que** l'élément (3) intermédiaire est en acier inoxydable.

12. Liaison disque de frein/moyeu suivant l'une des revendications précédentes,
**caractérisée en ce que** l'élément (3) intermédiaire est en une bande de tôle.

13. Liaison disque de frein/moyeu suivant l'une des revendications précédentes,
**caractérisée en ce que** les surfaces d'application des saillies représentent dans l'ensemble environ de 25% à 40% de la surface de recouvrement totale des branches (6, 7).
